# EUROPÄISCHE PATENTSCHRIFT

(11) **EP 1 748 903 B1**
(45) Veröffentlichungstag und Bekanntmachung des Hinweises auf die Patenterteilung: **05.08.2009**
(21) Anmeldenummer: 05735728.7
(22) Anmeldetag: 29.04.2005
(51) Int. Cl.: B42D 15/00, C09D 5/24, C09D 5/22, C09D 17/00, G07D 7/06, B41M 3/14

(54) **MASCHINENLESBARES SICHERHEITSELEMENT FÜR SICHERHEITSERZEUGNISSE**
MACHINE-READABLE SECURITY ELEMENT FOR SECURITY PRODUCTS
ELEMENT DE SECURITE LISIBLE PAR MACHINE POUR PRODUITS DE SECURITE

(30) Priorität: 24.05.2004 DE 102004025373
(43) Veröffentlichungstag der Anmeldung: 07.02.2007
(73) Patentinhaber: Merck Patent GmbH, 64293 Darmstadt (DE); Bundesdruckerei GmbH, 10958 Berlin (DE)
(72) Erfinder: KRIETSCH, Burkhard, 64807 Dieburg (DE); KUNTZ, Matthias, 64342 Seeheim-Jugenheim (DE); MUTH, Oliver, 12277 Berlin (DE); PAESCHKE, Manfred, 16352 Basdorf (DE)
(86) Internationale Anmeldenummer: PCT/EP2005/004603
(87) Internationale Veröffentlichungsnummer: WO 2005/115766

(56) Entgegenhaltungen:
- EP-A- 1 359 792
- WO-A-20/04108426
- DE-A1- 19 708 543
- DE-A1- 19 907 697
- US-A- 5 777 960

## Beschreibung

Die vorliegende Erfindung betrifft ein maschinenlesbares Sicherheitselement für Sicherheitserzeugnisse, welches nach berührungsloser Anregung in einem elektrischen Wechselfeld eine sichtbare und maschinell erfassbare Strahlung emittiert, eine Druckfarbe zur Herstellung eines solchen Sicherheitselementes sowie Sicherheitserzeugnisse, die ein solches enthalten.

Sicherheitserzeugnisse wie Banknoten, Schecks, Kreditkarten, Aktien, Pässe, Ausweisdokumente, Führerscheine, Eintrittskarten, Wertmarken und dergleichen werden seit vielen Jahren mit verschiedenen Sicherheitsmerkmalen ausgerüstet, die eine Fälschung dieser Produkte erschweren sollen.

Vorzugsweise werden Sicherheitserzeugnisse mit verschiedenen Sicherheitselementen ausgestattet, die unterschiedlichen Sicherheitsstufen angehören. Dabei ist es von großem Vorteil, wenn ein und dasselbe Sicherheitselement gleichzeitig mehreren Sicherheitsstufen angehört, d.h. wenn eine begrenzte Fläche eines Sicherheitserzeugnisses sowohl optisch ohne Hilfsmittel als auch mit Hilfsmitteln verifiziert werden kann, wobei der wahrnehmbare optische Eindruck in der Regel verschieden ist. Besonders erstrebenswert ist es, wenn ein solches Sicherheitselement, das verschiedene Sicherheitsstufen aufweist, in einem einfachen, vorzugsweise einzigen, Verfahrensschritt erzeugt werden kann.

Zu diesen Sicherheitselementen gehören solche, die Substanzen mit elektrolumineszierenden Eigenschaften enthalten. Darunter werden solche Substanzen verstanden, die durch Anregung in einem elektrischen Wechselfeld eine sichtbare Strahlung emittieren.

Um ein solches Sicherheitselement nachweisen zu können, muß das Sicherheitserzeugnis mit einem elektrischen Wechselfeld angeregt werden.

Sicherheitselemente, welche Substanzen mit elektrolumineszierenden Eigenschaften enthalten, sind bekannt.

So wird in DE 41 26 051 ein Sicherheitsdokument mit einem eingebetteten Sicherheitsfaden beschrieben, welcher elektrolumineszierende Eigenschaften aufweist. Dieser Sicherheitsfaden ist mehrschichtig aufgebaut und enthält zwischen zwei elektrisch leitfähigen Schichten, welche als Elektroden wirken, eine Schicht, die eine elektrolumineszierende Substanz enthält.
Eine Lichtemission ist nur bei diesem besonderen Aufbau und unter direkter elektrischer Kontaktierung der Elektroden nachweisbar.

Die DE 197 35 293 offenbart ein Wert- und Sicherheitserzeugnis mit einem Lumineszenzelement. Das Lumineszenzelement befindet sich in einer Schicht des Sicherheitserzeugnisses, welche unterhalb einer Schicht, die ein Echtheitsmerkmal aufweist, angeordnet ist. Es dient damit als Hintergrundbeleuchtung für das darüber liegende Echtheitselement.
Dabei ist die Ausgestaltung des Echtheitselementes von untergeordneter Bedeutung. Es muss auch nicht notwendigerweise ohne Hilfsmittel optisch sichtbar sein. Eine laserfähige Polycarbonatfolie wird als Echtheitselement beschrieben. Das Elektrolumineszenzelement wird durch aufgedruckte Elektroden und in einer davon separierten Schicht befindlichen Substanzen mit elektrolumineszierenden Eigenschaften erzeugt.
Dieser Aufbau ist sehr kompliziert und erlaubt ebenfalls nur eine kontaktbehaftete Erzeugung der Elektrolumineszenz.

Ein Wert- und Sicherheitserzeugnis mit ähnlichem Aufbau wird in DE 197 08 543 beschrieben. Hier sind die elektrolumineszierenden Substanzen, welche aufgedruckt werden, so angeordnet, dass sie von den durch die planare Elektrodenanordnung erzeugten Feldlinien des elektrischen Wechselfeldes durchsetzt werden.
Auch hier ist keine berührungslose Erzeugung der Elektrolumineszenz möglich.

In EP 1 156 934 B1 wird ein Wertdokument offenbart, welches wenigstens ein optisch variables Material und wenigstens einen maschinenlesbaren Merkmalstoff enthält, wobei der Merkmalstoff in Form einer Codierung oder einer alphanumerischen Information vorliegt und das optisch variable Material ein Pigment ist. Dabei darf der maschinenlesbare Merkmalstoff den sichtbaren optisch variablen Effekt des optisch variablen Materials nicht beeinträchtigen. Der maschinenlesbare Merkmalstoff kann u.a. ein Lumineszenzstoff, ein elektrisch leitfähiges Polymer, Ruß und dergleichen sein. Diese werden in der Regel alternativ eingesetzt.
Als Lumineszenzstoffe werden solche beschrieben, die außerhalb des visuellen Spektralbereiches Licht emittieren. Substanzen mit elektrolumineszierenden Eigenschaften sind nicht genannt. Das elektrisch leitfähige Polymer oder der Ruß werden zur Erzeugung elektrisch leitfähiger Schichten eingesetzt.
Der maschinenlesbare Merkmalstoff kann entweder in derselben Schicht wie das optisch variable Material oder aber auch in einer davon getrennten Schicht vorliegen. Obwohl in diesem Wertdokument vorteilhaft zwei verschiedenen Sicherheitsstufen miteinander kombiniert sind, handelt es sich bei dem maschinenlesbaren Merkmal um ein unter IR- oder UV-Licht detektierbares Merkmal, welches mit speziellen Prüfgeräten, die ein elektrisches Wechselstromfeld erzeugen, nicht maschinell ausgelesen werden kann. Diese Geräte werden jedoch in professionellen Wertdokumentprüfgeräten wie z.B. Automaten zum Zählen und Überprüfen von Banknoten, hauptsächlich eingesetzt.

Es war daher die Aufgabe der vorliegenden Erfindung, ein maschinenlesbares, elektrolumineszierendes Sicherheitselement für Sicherheitserzeugnisse zur Verfügung zu stellen, welches bei kontaktloser Anregung in einem elektrischen Wechselfeld eine maschinell auswertbare Lumineszenz aufweist, einen einfachen Aufbau besitzt, vorzugsweise transparent ist, mittels eines einfachen Verfahrens auf ein Sicherheitserzeugnis aufgebracht werden kann und in welches auf einfache Weise eine weitere Sicherheitsstufe integriert werden kann.

Eine weitere Aufgabe war es, eine Druckfarbe zur Herstellung eines solchen Sicherheitselementes zur Verfügung zu stellen.

Des weiteren bestand eine zusätzliche Aufgabe der vorliegenden Erfindung darin, ein Pigmentgemisch zur Verfügung zu stellen, welches für eine Druckfarbe zur Herstellung eines Sicherheitselementes mit den oben genannten Eigenschaften eingesetzt werden kann.

Schließlich war es ebenso Aufgabe der vorliegenden Erfindung, ein Sicherheitserzeugnis zur Verfügung zu stellen, welches ein Sicherheitselement umfasst, das bei kontaktloser Anregung durch ein elektrisches Wechselfeld eine hohe Elektrolumineszenzintensität aufweist.

Die erfindungsgemäße Aufgabe wird durch ein maschinentesbares Sicherheitselement für Sicherheitserzeugnisse nach Anspruch 1 gelöst.

Des weiteren wird die erfindungsgemäße Aufgabe durch eine Druckfarbe zur Herstellung eines Sicherheitselementes gelöst, welche mindestens eine partikelförmige Substanz mit elektrolumineszierenden Eigenschaften sowie ein transparentes elektrisch leitfähiges Pigment enthält.

Die erfindungsgemäße Aufgabe wird außerdem durch ein Sicherheitserzeugnis gelöst, welches ein ein- oder mehrschichtiges Trägermaterial und mindestens ein auf oder innerhalb einer Schicht des Trägermaterials angeordnetes maschinenlesbares Sicherheitselement mit der oben beschriebenen Zusammensetzung enthält.

Unter Sicherheitserzeugnissen im Sinne der Erfindung sind Wertdokumente wie Banknoten, Schecks, Kreditkarten, Aktien, Pässe, Ausweisdokumente, Führerscheine, Eintrittskarten, Wertmarken, Etiketten, Verpackungsmaterialien, Siegel und dergleichen zu verstehen, jedoch ebenso zu sichernde Gegenstände des alltäglichen Gebrauchs wie beispielsweise Bekleidung, Schuhe, Haushaltsartikel, Haushaltselektronikartikel und ähnliche, wobei das erfindungsgemäße Sicherheitselement unmittelbar auf dem Gegenstand angebracht ist.

Das erfindungsgemäße Sicherheitselement enthält mindestens eine partikelförmige Substanz mit elektrolumineszierenden Eigenschaften sowie ein transparentes elektrisch leitfähiges Pigment.

Bei den Substanzen mit elektrolumineszierenden Eigenschaften handelt sich in der Regel um partikuläre Materialien, welche anorganische Verbindungen der Gruppe II und VI des Periodensystems, beispielsweise ZnS oder CdS, die mit Metallen wie Cu, Mn oder Ag dotiert oder aktiviert sind, enthalten. Ebenso können partikuläre lumineszierende Substanzen auf der Basis von überwiegend mit Mn, Sr oder mit seltenen Erden aktivierten Silikaten, Aluminaten, Phosphaten, Wolframaten, Germanaten, Boraten etc., insbesondere Substanzen auf der Basis von Zn₂SiO₄:Mn oder auch partikuläre organische Polymere oder Gemische aus den vorgenannten Verbindungen eingesetzt werden.

Diese Substanzen emittieren nach Anregung in einem elektrischen Wechselfeld eine sichtbare Strahlung. Vorzugsweise erfolgt die Emission sichtbaren Lichtes allein oder überwiegend durch die Anregung in einem elektrischen Wechselfeld und in geringerem Maße auch durch Anregung im ultravioletten oder infraroten Spektralbereich.

Vorteilhafterweise liegen die Partikel in Form von mikroverkapselten Verbindungen vor. Als Materialien für die umhüllende Schicht sind insbesondere Polymere oder auch verschiedene Metalloxide gut geeignet. Diese schützen die elektrolumineszierenden Substanzen vor verschiedenen Umgebungseinflüssen, beispielsweise vor den nassen Komponenten der Druckfarbe, welche in der Langzeitwirkung eine Zersetzung der elektrolumineszierenden Substanzen bewirken können. Außerdem kann die Alterungsbeständigkeit der elektrolumineszierenden Substanzen erhöht oder ihre Lichtemission durch Filterschichten modifiziert werden.

Die Teilchengröße der Partikel ist so ausgewählt, dass sie für die drucktechnische Verarbeitung und insbesondere für den Tiefdruck geeignet sind. Hierfür kommen vorzugsweise mittlere Teilchengrößen im Bereich von etwa 0,2 bis etwa 100 µm, vorzugsweise von 1 bis 50 µm und besonders bevorzugt von 2 bis 30 µm in Betracht.

Um sicher zu stellen, dass keine Anregung der Lumineszenz im ultravioletten Spektralbereich erfolgt, können zusätzlich noch UV-Filterschichten auf der Oberfläche der elektrolumineszierenden Partikel aufgebracht sein.

Es ist auch möglich, die partikulären elektrolumineszierenden Substanzen mit anorganischen oder organischen Farbstoffen zu versetzen, so dass sich die Reflexionsbänden bzw. Absorptionsbanden dieser Substanzen verschieben. Damit ist es möglich, die Palette der zur Verfügung stehenden Farbtöne für die Lichtemission wesentlich zu erweitern, da die ursprünglich verwendbaren Grundmaterialien nur eine geringe Anzahl an Farbtönen emittieren.

Die partikulären elektrolumineszierenden Substanzen werden einzeln oder im Gemisch aus zwei oder mehreren verschiedenen eingesetzt. Werden verschiedene Substanzen eingesetzt, ist es von Vorteil, wenn diese eine Strahlung von unterschiedlicher Farbigkeit emittieren.

Als transparente elektrisch leitfähige Pigmente werden solche Pigmente eingesetzt, die mindestens eine transparente elektrisch leitfähige Schicht aufweisen.

Bevorzugt werden solche Pigmente verwendet, die auf einem Substrat, welches aus der Gruppe bestehend aus TiO₂, synthetischem oder natürlichem Glimmer, anderen Schichtsilikaten, Glas, SiO₂ und/oder Al₂O₃ ausgewählt ist, mindestens eine transparente elektrisch leitfähige Schicht aufweisen.

Dabei ist es besonders bevorzugt, wenn die genannten Substrate plättchenförmig sind. Prinzipiell ist jedoch auch der Einsatz von Pigmenten geeignet, welche auf einem nicht plättchenförmigen Substrat aus den oben genannten Materialien mindestens eine transparente elektrisch leitfähige Schicht aufweisen. Transparente Pigmente, welche aus einem elektrisch leitfähigen Material bestehen, sind ebenfalls geeignet. Besonders vorteilhaft ist es, wenn die elektrisch leitfähigen Pigmente sowohl im Querschnitt als auch in der Längsachse sanft abgerundete Formen ohne Ecken, scharfe Kanten oder herausragende Spitzen aufweisen. Der Einsatz der nicht plättchenförmigen Pigmente wird lediglich durch die Applikationseigenschaften im erfindungsgemäßen Sicherheitselement beschränkt.

In der Regel umfasst die elektrisch leitfähige Schicht oder das elektrisch leitfähige Material ein oder mehrere leitfähige dotierte Metalloxide, wie beispielsweise Zinnoxid, Zinkoxid, Indiumoxid oder Titanoxid, welche mit Gallium, Aluminium, Indium, Thallium, Germanium, Zinn, Phosphor, Arsen, Antimon, Selen, Tellur und/oder Fluor dotiert sind.

Die oben genannten transparenten leitfähigen Pigmente können, sofern ein Substrat vorhanden ist, oberhalb und/oder unterhalb der leitfähigen Schicht eine oder mehrere weitere Schichten aufweisen. Diese Schichten können Metalloxide, Metalloxidhydrate, Metallsuboxide, Metallfluoride, Metallnitride, Metalloxynitride oder Mischungen dieser Materialien enthalten.

Durch die Aufbringung dieser zusätzlichen Schichten können die Farbeigenschaften der Pigmente den Anforderungen der Anwender angepasst werden, insbesondere wenn sich die zusätzlichen Schichten unterhalb der leitfähigen Schicht befinden. Durch die Aufbringung von zusätzlichen Schichten oberhalb der leitfähigen Schicht lässt sich die.Leitfähigkeit den Erfordernissen der Anwendung gezielt anpassen.

Es wurde festgestellt, dass es beispielsweise durchaus vorteilhaft ist, wenn sich oberhalb der leitfähigen Schicht eine dielektrische Schicht befindet, welche beim gegenseitigen Berühren von leitfähigen Pigmenten im erfindungsgemäßen Sicherheitselement eine direkte Berührung der leitfähigen Schichten verhindert.

Als besonders bevorzugtes Material für ein transparentes elektrisch leitfähiges Pigment wird ein mit mindestens einer elektrisch leitfähigen Metalloxidschicht beschichteter Glimmer eingesetzt. Besonders bevorzugt ist hier ein Glimmerpigment, welches mit einer Schicht aus mit Antimon dotiertem Zinnoxid beschichtet ist, ein Glimmerpigment, welches mit einer Titanoxidschicht, einer Siliziumoxidschicht und mit einer mit Antimon dotierten Zinnoxidschicht beschichtet ist oder ein Glimmerpigment, welches mit einer mit Antimon dotierten Zinnoxidschicht und einer weiteren Metalloxidschicht, insbesondere einer Titanoxidschicht, beschichtet ist.

Solche Pigmente werden im Handel unter der Bezeichnung Minatec® von der Merck KGaA angeboten.

Das transparente elektrisch leitfähige Pigment im erfindungsgemäßen Sicherheitselement muss eine ausreichend hohe Transparenz bei gleichzeitig hoher elektrischer Leitfähigkeit aufweisen. Aus diesem Grunde ist es erforderlich, dass der Teilchendurchmesser des Pigmentes in einem Bereich von 1 bis 500 µm, vorzugsweise von 2 bis 100 µm und besonders bevorzugt von 5 bis 70 µm liegt. Eine enge Teilchengrößenverteilung ist bevorzugt.

Das Aspektverhältnis, d.h. das Verhältnis von mittlerem Durchmesser zu mittlerer Dicke der Pigmente bei plättchenförmigen leitfähigen Pigmenten beträgt mindestens 2:1, vorzugsweise jedoch mindestens 10:1 und besonders bevorzugt mindestens 100:1.

Als besonders transparent bei hoher Leitfähigkeit haben sich elektrisch leitfähige plättchenförmige Pigmente der oben beschriebenen Zusammensetzung erwiesen, deren anzahlgewichtete mittlere Kornfläche F₅₀ größer oder gleich 150 µm², insbesondere größer oder gleich 200 µm² ist. Diese weisen noch vorteilhaftere Eigenschaften auf, wenn der anzahlgewichtete Anteil an Pigmenten mit einer Kornfläche von weniger als 80 µm² kleiner oder gleich 33 %, und bevorzugt weniger als 25 %, bezogen auf die transparenten leitfähigen Pigmente, beträgt. Eine noch bessere Transparenz wird jedoch erhalten, wenn der anzahlgewichtete Anteil an Pigmenten mit einer Kornfläche von weniger als 40 µm² kleiner oder gleich 15 %, und vorzugsweise kleiner oder gleich 10 %, bezogen auf die transparenten leitfähigen Pigmente, beträgt. Die Verringerung der Feinanteile führt zu einer Verringerung der Lichtstreuung und damit der Trübung im erfindungsgemäßen Sicherheitselement.

Unter Kornfläche wird der Wert für die Größe der Hauptfläche der Plättchen, nämlich die Fläche mit der längsten Achse, verstanden.

Die Kontrolle des Feinanteils erfolgt beispielsweise durch Ausmessen unter dem Mikroskop und Auszählen der vermessenen Teilchen. Dies kann visuell durchgeführt werden, ggf. vereinfacht durch Vergleiche der Proben gegen ausgezählte Standards oder automatisch mit Hilfe einer Videokamera und einer geeigneten automatischen Bildauswertungssoftware. Derartige automatische Auswertsysteme für die Korngrößenanalyse sind dem Fachmann bekannt und kommerziell erhältlich. Für eine statistisch gesicherte Korngrößenanalyse sollten wenigstens 1000 und vorzugsweise 2000 Partikel oder mehr vermessen werden.

Das transparente elektrisch leitfähige Pigment kann in erfindungsgemäßen Sicherheitselement einzeln oder als Gemisch von zwei oder mehreren verschiedenen eingesetzt werden. Dabei kann die Verschiedenartigkeit sowohl im Einsatz von Pigmenten aus verschiedenen Materialien, mit unterschiedlichen Formen und/oder mit unterschiedlicher Farbigkeit bestehen. Lediglich die optische Transparenz des Materials muss gewährleistet sein.

Zur Erzielung einer guten Maschinenlesbarkeit mit ausreichend hoher Elektrolumineszenzintensität ist es wesentlich, dass im Sicherheitselement der vorliegenden Erfindung sowohl Substanzen mit elektrolumineszierenden Eigenschaften als auch transparente elektrisch leitfähige Pigmente vorhanden sind, da die Anwesenheit der letzteren eine Erhöhung der Elektrolumineszenzintensität bei den ersteren bewirkt und so eine maschinelle Lesbarkeit generiert.

Wenn das erfindungsgemäße Sicherheitselement neben der maschinenlesbaren Elektrolumineszenz noch eine weitere Sicherheitsstufe aufweisen soll, kann es zusätzlich noch mindestens ein plättchenförmiges Effektpigment und/oder ein organisches oder anorganisches Farbpigment enthalten.

Als plättchenförmige Effektpigmente werden plättchenförmige Perlglanzpigmente, überwiegend transparente oder semitransparente Interferenzpigmente sowie Metalleffektpigmente bezeichnet. Auch Flüssigkristallpigmente, so genannte LCPs (Liquid Crystal Pigments), oder strukturierte Polymerplättchen, so genannte holographische Pigmente, zählen hierzu. Diese plättchenförmigen Pigmente sind aus einer oder mehreren Schichten aus gegebenenfalls unterschiedlichen Materialien aufgebaut.

Perlglanzpigmente bestehen aus transparenten Plättchen mit hoher Brechzahl und zeigen bei paralleler Orientierung durch Mehrfachreflexion einen charakteristischen Perlglanz. Solche Perlglanzpigmente, die zusätzlich auch Interferenzfarben zeigen, werden als Interferenzpigmente bezeichnet.

Obwohl natürlich auch klassische Perlglanzpigmente wie TiO₂-Plättchen, basisches Bleicarbonat, BiOCI- Pigmente oder Fischsilberpigmente prinzipiell geeignet sind, werden als plättchenförmige Effektpigmente im Sinne der Erfindung vorzugsweise Interferenzpigmente oder Metalleffektpigmente eingesetzt, welche auf einem anorganischen plättchenförmigen Träger mindestens eine Beschichtung aus einem Metall, Metalloxid, Metalloxidhydrat oder deren Gemischen, einem Metallmischoxid, Metallsuboxid, Metalloxinitrid, Metallfluorid, BiOCl oder einem Polymer aufweisen. Die Metalleffektpigmente weisen bevorzugt mindestens eine Metallschicht auf. Der anorganische plättchenförmige Träger besteht vorzugsweise aus natürlichem oder synthetischem Glimmer, Kaolin oder anderen Schichtsilikaten, aus Glas, SiO₂, TiO₂, Al₂O₃, Fe₂O₃, Polymerplättchen, Graphitplättchen oder aus Metallplättchen, wie beispielsweise aus Aluminium, Titan, Bronze, Silber, Kupfer, Gold, Stahl oder diversen Metalllegierungen.
Besonders bevorzugt sind Träger aus Glimmer, Glas, Graphit, SiO₂, TiO₂ und Al₂O₃ oder deren Gemischen.

Die Größe dieser Substrate ist an sich nicht kritisch. Die Substrate weisen in der Regel eine Dicke zwischen 0,01 und 5 µm, insbesondere zwischen 0,05 und 4,5 µm auf. Die Ausdehnung in der Länge bzw. Breite beträgt üblicherweise zwischen 1 und 250 µm, vorzugsweise zwischen 2 und 200 µm und insbesondere zwischen 2 und 100 µm. Sie besitzen in der Regel ein Aspektverhältnis (Verhältnis des mittleren Durchmessers zur mittleren Teilchendicke) von 2:1 bis 25000:1, und insbesondere von 3:1 bis 2000:1.

Bevorzugt besteht eine auf dem Träger aufgebrachte Beschichtung aus Metallen, Metalloxiden, Metallmischoxiden, Metallsuboxiden oder Metallfluoriden und insbesondere aus einem farblosen oder farbigen Metalloxid, ausgewählt aus TiO₂, Titansuboxiden, Titanoxinitriden, Fe₂O₃, Fe₃O₄, SnO₂, Sb₂O₃, SiO₂, Al₂O₃, ZrO₂, B₂O₃, Cr₂O₃, ZnO, CuO, NiO oder deren Gemischen. Beschichtungen aus Metallen sind vorzugsweise aus Aluminium, Titan, Chrom, Nickel, Silber, Zink, Molybdän, Tantal, Wolfram, Palladium, Kupfer, Gold, Platin oder diese enthaltenden Legierungen.
Als Metallfluorid wird bevorzugt MgF₂ eingesetzt.

Als plättchenförmige Effektpigmente werden besonders bevorzugt mehrschichtige Effektpigmente eingesetzt. Diese weisen auf einem plättchenförmigen, vorzugsweise nichtmetallischen Träger mehrere Schichten auf, welche vorzugsweise aus den vorab genannten Materialien bestehen und verschiedene Brechzahlen in der Art aufweisen, dass sich jeweils mindestens zwei Schichten unterschiedlicher Brechzahl abwechselnd auf dem Träger befinden, wobei sich die Brechzahlen in den einzelnen Schichten um wenigstens 0,1 und bevorzugt um wenigstens 0,3 unterscheiden. Dabei können die auf dem Träger befindlichen Schichten sowohl nahezu transparent als auch farbig oder semitransparent sein.

Ebenso können die sogenannten LCPs, die aus vernetzten, orientierten, cholesterischen Flüssigkristallen bestehen, oder aber auch als holographische Pigmente bezeichnete strukturierte Polymerplättchen als plättchenförmige Effektpigmente eingesetzt werden.

Die vorab beschriebenen plättchenförmigen Effektpigmente können im Sicherheitselement gemäß der vorliegenden Erfindung einzeln oder im Gemisch vorhanden sein.

Die erfindungsgemäß eingesetzten plättchenförmigen Effektpigmente sind vorzugsweise transparent oder semitransparent, d.h. sie transmittieren mindestens 10% des einfallenden Lichtes. Solche plättchenförmigen Effektpigmente werden bevorzugt verwendet, da ihre Transparenz in einem Sicherheitserzeugnis, welches ein Sicherheitselement gemäß der vorliegenden Erfindung aufweist, zu einer großen Vielfalt an möglichen Hinter- oder Untergrundfarben beiträgt und gleichzeitig die Intensität der durch Elektrolumineszenz erzeugten Lichtemission nicht beeinträchtigt wird.

Bei bestimmten Ausführungsformen der vorliegenden Erfindung ist es jedoch von Vorteil, wenn ein plättchenförmiges Effektpigment eingesetzt wird, das wenigstens eine Metallschicht aufweist.

In einer besonders bevorzugten Ausführungsform der vorliegenden Erfindung wird ein plättchenförmiges Effektpigment eingesetzt, welches unter verschiedenen Beleuchtüngs- und/oder Betrachtungswinkeln einen unterschiedlichen visuell wahrnehmbaren Farb- und/oder Helligkeitseindruck hinterlässt. Bei unterschiedlichen Farbeindrücken wird diese Eigenschaft als Farbflop bezeichnet. Insbesondere Pigmente, die einen Farbflop aufweisen, erzeugen in den damit hergestellten Sicherheitselementen nicht kopierbare Farb- und Glanzeindrücke, welche mit dem bloßen Auge ohne Hilfsmittel gut wahrnehmbar sind. Solche Pigmente werden auch als optisch variabel bezeichnet.

Die optisch variablen plättchenförmigen Effektpigmente im Sinne der Erfindung weisen bevorzugt unter mindestens zwei verschiedenen Beleuchtungs- oder Betrachtungswinkeln mindestens zwei und höchstens vier, vorzugsweise aber unter zwei verschiedenen Beleuchtungs- oder Betrachtungswinkeln zwei oder unter drei verschiedenen Beleuchtungs- oder Betrachtungswinkeln drei optisch klar unterscheidbare diskrete Farben auf. Vorzugsweise liegen jeweils nur die diskreten Farbtöne und keine Zwischenstufen vor, das heißt, ein klarer Wechsel von einer Farbe zu einer anderen Farbe ist beim Abkippen des Sicherheitselementes, welches die optisch variablen Pigmente enthält, erkennbar. Diese Eigenschaft erleichtert dem Betrachter einerseits das Erkennen des Sicherheitselementes als solches und erschwert gleichzeitig die Kopierbarkeit dieses Merkmales, da in den handelsüblichen Farbkopierern Farbflopeffekte nicht kopiert und reproduziert werden können.

Selbstverständlich sind jedoch auch optisch variable plättchenförmige Effektpigmente einsetzbar, die beim Abkippen über verschiedene Beleuchtungs- und/oder Betrachtungswinkel einen Farbverlauf, d.h. viele verschiedene Farbtöne, wie beispielsweise den typischen Perlglanz, aufweisen. Auch solche diffusen Farbänderungen sind vom menschlichen Auge gut erfaßbar.

Um ihre volle optische Wirkung entfalten zu können, ist es von Vorteil, wenn die erfindungsgemäß eingesetzten plättchenförmigen Effektpigmente im sie enthaltenden Sicherheitselement in orientierter Form vorliegen, d.h. sie sind nahezu parallel zu den mit dem Sicherheitselement versehenen Oberflächen des Sicherheitserzeugnisses ausgerichtet. Eine solche Ausrichtung erfolgt in der Regel bereits im wesentlichen mittels der üblichen angewandten Verfahren zur Aufbringung des Sicherheitselementes, wie beispielsweise üblichen Druckverfahren.

Als plättchenförmige Effektpigmente können beispielsweise die im Handel erhältlichen Interferenzpigmente, welche unter den Bezeichnungen Iriodin®, Colorstream®, Xirallic®, Lustrepak®, Colorcrypt®, Colorcode® und Securalic® von der Firma Merck KGaA angeboten werden, Mearlin® der Firma Mearl, Metalleffektpigmente der Firma Eckhard sowie goniochromatische (optisch variable) Effektpigmente wie beispielsweise Variochrom® der Firma BASF, Chromafflair® der Firma Flex Products Inc., Helicone® der Firma Wacker oder holographische Pigmente der Firma Spectratec sowie andere gleichartige kommerziell erhältliche Pigmente eingesetzt werden. Diese Aufzählung ist jedoch lediglich als beispielhaft und nicht als beschränkend anzusehen.

Als anorganische Farbpigmente sind alle gebräuchlichen transparenten und deckenden Weiß-, Bunt- und Schwarzpigmente, wie beispielsweise Berliner Blau, Bismutvanadat, Goethit, Magnetit, Hämatit, Chromoxid, Chromhydroxid, Cobaltaluminat, Ultramarin, Chrom-Eisen-Mischoxide, Spinelle wie Thenards Blau, Cadmiumsulfide und -selenide, Chromat-Pigmente oder Ruß geeignet, während als organische Farbpigmente insbesondere Chinacridone, Benzimidazole, Kupferphthalocyanin, Azopigmente, Perinone, Anthanthrone, weitere Phthalocyanine, Anthrachinone, Indigo, Thioindigo und deren Derivate, oder Karminrot zu nennen sind. Generell können sämtliche, insbesondere im Druckbereich gebräuchlichen, organischen oder anorganischen Farbpigmente eingesetzt werden. Zur Abschirmung gegen ultraviolette Strahlung können auch Pigmente eingesetzt werden, welche UV-Licht absorbieren. Von diesen seien Titandioxid und Zinkoxid nur beispielhaft genannt.

Die Partikelgröße der anorganischen und organischen Farbpigmente ist nicht limitiert, muss jedoch an die Erfordernisse der Applikation des Sicherheitselementes auf oder in einem Sicherheitserzeugnis, beispielsweise mit einem Druckverfahren, angepasst werden.

Das erfindungsgemäße Sicherheitselement wird auf ein Sicherheitserzeugnis vollflächig oder partiell aufgebracht.

In der einfachsten Variante geschieht dies mit Hilfe einer Druckfarbe in einem gängigen Druckverfahren.

Demzufolge ist auch eine Druckfarbe zur Herstellung eines Sicherheitselementes, welche mindestens eine partikelförmige Substanz mit elektrolumineszierenden Eigenschaften sowie ein transparentes elektrisch leitfähiges Pigment enthält, Gegenstand der vorliegenden Erfindung.

Als partikelförmige Substanz mit-elektrolumineszierenden Eigenschaften und als transparente elektrisch leitfähige Pigmente kommen die bereits vorab beschriebenen Materialien in Frage.

Die genannten Pigmente und Partikel liegen in der erfindungsgemäßen Druckfarbe in einer solchen geeigneten Konzentration vor, dass ein Verdrucken der Farbe noch problemlos möglich ist. So beträgt die Konzentration der partikelförmigen Substanz mit elektrolumineszierenden Eigenschaften in der Druckfarbe etwa 0,01 bis 20 Gew. -%, vorzugsweise 1 bis 10 und besonders bevorzugt 2 bis 8 Gew.-%, bezogen auf die Druckfarbe. Das transparente elektrisch leitfähige Pigment liegt dagegen im allgemeinen in einer Konzentration von etwa 0,01 bis etwa 20 Gew. -%, bevorzugt von 1 bis 10 Gew. -% und besonders bevorzugt von 2 bis 8 Gew. -%, bezogen auf die Druckfarbe, in dieser vor.

Für den Fall, dass das erfindungsgemäße Sicherheitselement auch plättchenförmige Effektpigmente und/oder organische oder anorganische Farbpigmente enthalten soll, sind diese in der Druckfarbe gemäß der vorliegenden Erfindung in einer Konzentration von etwa 0,01 bis etwa 40 Gew. -%, vorzugsweise 2 bis 20 Gew. -% und besonders bevorzugt 5 bis 15 Gew. -%, bezogen auf die Druckfarbe, enthalten.

Die genannten Pigmente und Partikel können der Druckfarbe einzeln oder im Gemisch zugegeben werden. Dies kann in Form der pulverförmigen Pigmente und Partikel erfolgen.
Vorzugsweise werden die oben genannten Pigmente und Partikel jedoch einzeln oder im Gemisch aus zumindest zwei verschiedenen Arten davon in Form von fließfähigen Pigmentpräparationen oder Trockenpräparaten in die erfindungsgemäße Druckfarbe eingebracht. Diese enthalten neben den Pigmentbestandteilen mindestens noch ein geeignetes Bindemittel. So kann beispielsweise eine Pigmentpräparation oder ein Trockenpräparat aus einem Gemisch aus einer partikulären Substanz mit elektrolumineszierenden Eigenschaften und einem transparenten elektrisch leitfähigen Pigment hergestellt werden, dem wahlweise noch ein oder mehrere Effekt- und/oder Farbpigmente zugemischt werden. Einzelpräparationen oder andere Kombinationen sind ebenfalls möglich. Unter fließfähigen Pigmentpräparationen werden insbesondere Pasten oder Anteigungen verstanden, welche neben den genannten Pigmenten noch Bindemittel, Lösemittel und optional ein oder mehrere Additive enthalten können. Die genannten Trockenpräparate enthalten in der Regel dieselben Zusatzstoffe, jedoch bei weitestgehend reduziertem Lösemittelgehalt. Als Trockenpräparate werden aber auch Präparate angesehen, welche 0 bis 8 Gew. -%, vorzugsweise 2 bis 8 Gew. -% und insbesondere 3 bis 6 Gew. -% an Wasser und/oder einem Lösemittel oder Lösemittelgemisch enthalten. Diese Trockenpräparate liegen vorzugsweise als Pearlets, Briketts, Pellets, Granulate, Chips, Würstchen oder in ähnlichen Formen vor und weisen in der Regel Teilchengrößen von etwa 0,2-80 mm auf. Solche fließfähigen Pigmentpräparationen und Trockenpräparate erleichtern den Transport, die Lagerung sowie das gleichmäßige Einbringen der Pigmente in die Druckfarbe, verhindern ein Entmischen von Pigmenten und weiteren Bestandteilen und fördern ein gutes Redispergierverhalten der Druckfarben.

Neben den Pigmentbestandteilen enthält die erfindungsgemäße Druckfarbe ein oder mehrere geeignete Bindemittel und optional weitere Zusatzstoffe wie Lösemittel, Haftvermittler, Dispergierhilfen, Trocknungsbeschleuniger, Fotoinitiatoren und dergleichen, die in Druckfarben gebräuchlich sind. Es ist selbstverständlich, dass diese Bindemittel und Zusatzstoffe an das zu verwendende Druckverfahren angepasst werden und dass die Druckfarbe eine angemessene Viskosität aufweist.
Dabei ist zu beachten, dass nur solche Bindemittel und Zusatzstoffe ausgewählt werden, die die elektrische Leitfähigkeit in dem mit der Druckfarbe hergestellten Sicherheitselement im wesentlichen nicht erhöhen, so dass die Ausbildung einer durchgehenden Leitfähigkeit im Sicherheitselement verhindert wird. Auch die Konzentration des transparenten elektrisch leitfähigen Pigmentes ist innerhalb der oben genannten Grenzen so auszuwählen, dass sich im Sicherheitselement keine durchgängige Leitfähigkeit ergibt.

Als Druckverfahren prinzipiell geeignet sind alle in der Herstellung von Sicherheitserzeugnissen bekannten und gebräuchlichen Druckverfahren, wie beispielsweise Offsetdruck, Lettersetdruck, Offset-Coating, Flexodruck, Siebdruck, Thermosublimationsdruck, Tiefdruck, insbesondere Rastertiefdruck und Stichtiefdruck, das so genannte Overprint Varnish Verfahren, sowie alle berührungslosen Druckverfahren. Besonders bevorzugt wird die erfindungsgemäße Druckfarbe jedoch im Siebdruckverfahren angewendet.

Es können jedoch auch andere Beschichtungsverfahren, wie beispielsweise Rakeln, Streichen, Stempeln, Gießverfahren, Lackierverfahren, Fließverfahren, Walzen- oder Rasterantragsyerfahren oder Auftragung mittels Luftbürste eingesetzt werden.

Das Sicherheitselement gemäß der vorliegenden Erfindung kann auch in Form einer polymeren Schicht vorliegen, welche vollflächig oder partiell auf oder in einem Sicherheitserzeugnis vorliegt.

Eine weitere bevorzugte Ausführungsform der Erfindung ist daher eine polymere Schicht, welche das erfindungsgemäße Sicherheitselement darstellt und sich auf oder in einem Sicherheitserzeugnis befindet. Diese polymere Schicht enthält mindestens eine partikelförmige Substanz mit elektrolumineszierenden Eigenschaften sowie ein transparentes elektrisch leitfähiges Pigment. In einer bevorzugten Ausführungsform enthält die polymere Schicht außerdem mindestens ein plättchenförmiges Effektpigment und/oder mindestens ein organisches oder anorganisches Farbpigment.

Bei der polymeren Schicht kann es sich etwa um eine vollflächig auf einem Sicher-heitserzeugnis aufkaschierte, laminierte oder geklebte Folie oder beispielsweise um eine mit anderen Polymerfolien (mit oder ohne Sicherheitselemente) coextrudierte Folie handeln. Auch starre Platten aus polymeren Materialien sind geeignet, welche sowohl transparente elektrisch leitfähige Pigmente als auch partikuläre elektrolumineszierende Substanzen enthalten und mit anderen, gegebenenfalls informationstragenden Schichtmaterialien auf herkömmliche Weise, beispielsweise durch Kleben, verbunden sind. Diese Folien oder Platten können sich sowohl auf der Oberfläche eines Sicherheitserzeugnisses als auch in einer Zwischenschicht befinden, die beidseitig von anderen Polymerschichten umgeben ist. Sie können jedoch auch per se die Basis, d.h. das Trägermaterial eines Sicherheitserzeugnisses bilden.

Dabei ist die Dicke der Polymerschichten, das polymere Material, die Flexibilität sowie die Art der Verbindung dieser Schichten mit anderen Schichten des Sicherheitselementes nicht beschränkend, solange das elektrolumineszierende Merkmal maschinenlesbar ist und durch ggf. weiterhin zugefügte plättchenförmige Effektpigmente oder anorganische und/oder organische Farbpigmente erzeugte Farb-und/oder Glanzeffekte eindeutig erkannt und bewertet werden können.

Die polymere Schicht kann ebenso partiell auf ein Wertdokument auf- oder in dieses eingebracht werden. Hier ist wie beim Bedrucken jede denkbare Form geeignet, solange die Elektrolumineszenz und ggf. die zusätzlichen Farb- und Glanzeffekte noch eindeutig erkennbar bzw. maschinenlesbar sind. Es kommen alle bereits für das Bedrucken aufgeführten Formen in Betracht. Bevorzugt ist dabei das Auf- oder Einbringen einer streifenförmigen polymeren Schicht auf oder in ein Wertdokument. Wird die polymere Schicht auf einen zu sichernden Gegenstand des täglichen Bedarfs aufgebracht, ist sie aus praktischen und ästhetischen Gründen vorzugsweise ebenfalls partiell auf dessen Oberfläche vorhanden.

Die Art der partiellen Auf- oder Einbringung in das Sicherheitserzeugnis ist nicht als beschränkend anzusehen. Beispielsweise lassen sich hier Kleben, Kaschieren, Laminieren oder andere gängige, für polymere Schichtmaterialien gebräuchliche Verbindungsarten mit anderen Materialien nennen. Die anderen Schichtmaterialien bestehen vorzugsweise aus Papieren verschiedener Art oder polymeren Materialien, können jedoch auch textile Materialien oder Metalle etc. sein.

Besteht das erfindungsgemäße Sicherheitselement aus einer polymeren Schicht, so weist das Sicherheitselement in Form der polymeren Schicht zwei im wesentlichen parallel zueinander liegende Oberflächen auf und enthält in der polymeren Schicht mindestens eine partikelförmige Substanz mit elektrolumineszierenden Eigenschaften, ein transparentes elektrisch leitfähiges Pigment sowie mindestens ein Polymer.

Die Konzentration der partikelförmigen Substanz mit elektrolumineszierenden Eigenschaften im polymeren Kunststoff beträgt etwa 0,05 bis 15 Gew. -%, vorzugsweise 0,2 bis 10 und besonders bevorzugt 1 bis 8 Gew. -%, bezogen auf den Kunststoff. Das transparente elektrisch leitfähige Pigment liegt dagegen im allgemeinen in einer Konzentration von etwa 0,01 bis etwa 30 Gew. -%, bevorzugt von 0,2 bis 15 Gew. -% und besonders bevorzugt von 1 bis 8 Gew. -%, bezogen auf den Kunststoff, vor.

Für den Fall, dass das erfindungsgemäße Sicherheitselement auch plättchenförmige Effektpigmente und/oder organische oder anorganische Farbpigmente enthalten soll, sind diese in der polymeren Schicht in einer Konzentration von etwa 0,01 bis etwa 40 Gew. -%, vorzugsweise 0,1 bis 20 Gew. -% und besonders bevorzugt 1 bis 10 Gew. - %, bezogen auf den Kunststoff, enthalten.

Die Pigmente und Partikel werden in die polymere Grundmasse bevorzugt in Form von Masterbatches eingebracht. Diese enthalten neben den Pigmentbestandteilen noch geeignete Mengen an Bindemitteln, Lösemitteln und ggf. weiteren-gebräuchlichen Hilfs- und Zusatzstoffen.

Als Polymere sind dabei alle thermoplastischen Kunststoffe einsetzbar, die gegenüber den elektrolumineszierenden Substanzen sowie den transparenten elektrisch leitfähigen plättchenförmigen Effektpigmenten ein inertes Verhalten zeigen. Insbesondere dürfen die Polymere nicht elektrisch leitfähig sein oder die elektrische Leitfähigkeit der polymeren Schicht verstärken. Es ist insbesondere darauf zu achten, dass die polymere Schicht als solche nicht durchgängig elektrisch leitfähig ist, obwohl in ihr elektrisch leitfähige Pigmente enthalten sind.

Vorzugsweise ist die polymere Schicht transparent. Daher werden bevorzugt transparente Polymere eingesetzt. Dies trifft beispielsweise auf Polystyrol, Polyvinylchlorid sowie deren Misch- und Pfropfpolymerisate, Polyvinylidenchlorid und -fluorid, Polyamide, Polyolefine, Polyacryl- und -vinylester, thermoplastische Polyurethane, Celluloseester und dergleichen zu. Sie können einzeln oder in geeigneten Gemischen eingesetzt werden.

Außerdem kann die polymere Schicht zusätzlich gebräuchliche Hilfs- und Zusatzstoffe wie Füllstoffe, UV-Stabilisatoren, Inhibitoren, Flammschutzmittel, Gleitmittel, Weichmacher, Lösemittel, Dispergiermittel und zusätzliche Farbstoffe bzw. organische und/oder anorganische Farbpigmente enthalten.

Die polymeren Schichten werden vorzugsweise durch verschiedene geeignete Verfahren wie Filmgließen, Schleudern, Extrusionsverfahren, Kalandrierung oder Pressverfahren, aber insbesondere durch Extrusionsverfahren oder über ein Folienblasverfahren hergestellt. Dazu werden die verschiedenen Ausgangsstoffe miteinander gemischt und in geeigneten, allgemein bekannten Anlagen zu Polymerschichten in Form von Folien verschiedener Stärke oder dünnen Platten verarbeitet. Dabei werden die in der Polymermasse enthaltenen plättchenförmigen Pigmente (Effektpigmente und ggf. auch die elektrisch leitfähigen Pigmente) an den Oberflächen der Werkzeuge ausgerichtet und sind daher in den entstehenden polymeren Schichten im wesentlichen parallel zu den Oberflächen der polymeren Schicht orientiert. Streckund Zugvorgänge beim Folienblasen oder als dem Extrudieren nachgeordnete Arbeitsschritte verstärken diese Orientierung der Pigmente zusätzlich.
Bei der nachfolgenden Abkühlung wird diese Orientierung fixiert.

Ein Entmischungs- oder Absetzverhalten des eingesetzten Pigmentgemisches ist in den polymeren Schichten nicht festzustellen.

Es muß jedoch darauf geachtet werden, dass keine zu großen Scherkräfte auf die Pigmentbestandteile einwirken, um ihrer Zerstörung vorzubeugen.

Statt in ein polymeres Material können die elektrolumineszierenden partikulären Substanzen und die transparenten elektrisch leitfähigen Pigmente auch in Papierrohmassen oder textile Rohmassen eingebracht werden.

Ein solches Sicherheitselement wird hergestellt, in dem neben den genannten Bestandteilen alle Grundmaterialien und Hilfsstoffe zugegeben werden, welche insbesondere in der Papierherstellung gebräuchlich sind. Änderung im gewöhnlichen Verfahrensablauf ergeben sich durch die partikulären Substanzen und Pigmente nicht. Vielmehr ist deren Konzentration so gewählt, dass alle gängigen Verfahren, beispielsweise der Papierherstellung, angewandt werden können. Diese sind dem Fachmann bekannt und müssen daher hier nicht näher erläutert werden. Es muss jedoch, wie vorab bereits beschrieben, darauf geachtet werden, dass die Pigmente im Herstellungsverfahren der Papiere und Textilien nicht beschädigt oder zerstört werden und dass im entstehenden Papier oder Textil keine durchgängige elektrische Leitfähigkeit auftritt.

Es bietet sich an, ein Sicherheitselement dieser Art als Trägermaterial bzw. Substrat für ein Sicherheitserzeugnis einzusetzen. Es kann jedoch auch mit anders- oder gleichartigen pigmentierten oder unpigmentierten Substratmaterialien verbunden werden.

Gegenstand der vorliegenden Erfindung ist außerdem ein Sicherheitserzeugnis, welches ein ein- oder mehrschichtiges Trägermaterial und mindestens ein auf oder innerhalb einer Schicht des Trägermaterials angeordnetes maschinenlesbares Sicherheitselement umfasst, wobei das Sicherheitselement mindestens eine partikelförmige Substanz mit elektrolumineszierenden Eigenschaften sowie ein transparentes elektrisch leitfähiges Pigment enthält.

Optional, aber bevorzugt, enthält das maschinenlesbare Sicherheitselement mindestens ein plättchenförmiges Effektpigment und/oder mindestens ein organisches oder anorganisches Farbpigment.

Als Trägermaterial für das erfindungsgemäße Sicherheitserzeugnis sind alle gebräuchlichen Arten von Papieren, insbesondere aber Sicherheitspapiere mit Flächengewichten bis zu 200g/m², bevorzugt solche aus Baumwollfasern, textile Materialien, polymere Materialien, insbesondere polymere Schichtmaterialien und Folien aller Art, sowie lackierte oder unlackierte Metallplatten, Metallfolien und dergleichen geeignet. Vorzugsweise werden Sicherheitspapiere oder Polymerfolien eingesetzt.

Das erfindungsgemäße Sicherheitserzeugnis basiert auf einem ein- oder mehrschichtigen Trägermaterial der oben genannten Art, wobei die einzelnen Schichten aus gleichartigen oder verschiedenen Materialien bestehen können.

Das Sicherheitselement ist in oder auf einer dieser Schichten angeordnet.

Ist das erfindungsgemäße Sicherheitselement auf einer Schicht des Trägermaterials angeordnet, dann wird ist es dort entweder vollflächig oder partiell aufgebracht.

Liegt es als einziges Sicherheitselement in einem Sicherheitserzeugnis vor, so ist es bevorzugt vollflächig auf diesem aufgebracht. Dabei handelt es sich bevorzugt um Sicherheitserzeugnisse mit niedrigerem Sicherheitsstandard, wie beispielsweise Verpackungsmaterialien, Etiketten, Siegel, Eintrittskarten und dergleichen. Eine vollflächige Aufbringung ist jedoch auch dann in Erwägung zu ziehen, wenn das erfindungsgemäße Sicherheitselement auf einer Seite des Sicherheitserzeugnisses als einziges Sicherheitselement vorhanden ist. Bei Sicherheitserzeugnissen mit einem hohen Sicherheitsstandard, wie beispielsweise Banknoten, liegen jedoch in der Regel mehrere verschiedene Sicherheitselemente auf jeder Seite des Sicherheitserzeugnisses nebeneinander vor. In diesem Falle kommt eine partielle Beschichtung mit dem erfindungsgemäßen Sicherheitselement in Betracht. Das Sicherheitselement wird dabei in unterschiedlichen, nicht beschränkten Formen auf dem Sicherheitserzeugnis aufgebracht, beispielsweise als Streifen, Punkte, Striche, alphanumerische Zeichen, bildhafte Darstellungen etc. Diese Formgebung wird allein durch das Auftragsverfahren und die maschinelle Lesbarkeit der Elektrolumineszenz bzw. die optische Erkennbarkeit der durch die Effekt-und/oder Farbpigmente erzeugten Wirkung beschränkt. Es sollte daher eine hinreichend große Fläche des Sicherheitserzeugnisses mit dem erfindungsgemäßen Sicherheitselement beschichtet sein, damit alle Sicherheitsstufen des Sicherheits-elementes vom Betrachter deutlich erkannt werden können beziehungsweise eindeutig maschinell auswertbar sind.

Ist das Sicherheitserzeugnis ein Gegenstand des täglichen Gebrauchs, wie etwa Bekleidung, Schuhe, Haushaltsartikel und dergleichen, bietet sich aus praktischen Gründen ebenfalls eine teilflächige Beschichtung an, die in Form und Größe nicht limitiert ist und vorteilhaft in die optische Gestaltung der Gebrauchsgegenstände mit einbezogen werden kann.

Wird das erfindungsgemäße Sicherheitselement in einem Druckverfahren hergestellt, enthält es die oben genannten Pigmentbestandteile selbstverständlich in einer höheren Konzentration als für die Druckfarbe angegeben, da nach dem Trocknen der Druckfarbe der Lösemittelanteil minimiert ist.

Eine Verstärkung der gewünschten Effekte wie optische Variabilität oder optisch sichtbare Farbigkeit und Elektrolumineszenzeigenschaften lässt sich erzielen, wenn die Pigmentkonzentration im erfindungsgemäßen Sicherheitserzeugnis durch mehrmaliges Aufbringen der Druckfarbe übereinander erhöht wird. Dabei ist es möglich, dass die verschiedenen Druckschichten Pigmente aus jeweils allen oder nur aus einzelnen der oben genannten drei Gruppen enthalten. So verstärkt ein Mehrfachauftrag von Druckfarben, die ein transparentes elektrisch leitfähiges plättchenförmiges Pigment enthalten, die Elektrolumineszenzeigenschaften des Sicherheitselementes.

Die farbigen und/oder bevorzugt optisch variablen Eigenschaften des Sicherheitselementes können beeinflusst werden, in dem mehrere Schichten, die Farbpigmente, Effektpigmente bzw. vorzugsweise optisch variable Pigmente enthalten, übereinander aufgebracht werden. Dabei muss nur mindestens eine Schicht sowohl eine partikelförmige Substanz mit elektrolumineszierenden Eigenschaften als auch ein transparentes elektrisch leitfähiges Pigment enthalten.

So ist es beispielsweise von Vorteil, wenn eine solche Schicht, die neben der partikelförmigen Substanz mit elektrolumineszierenden Eigenschaften und dem transparenten elektrisch leitfähigen Pigment auch ein transparentes Effektpigment enthält, auf einer Schicht aufgebracht ist, die ein semitransparentes oder opakes Effektpigment enthält.
Auch kann auf einer Schicht, die neben der partikelförmigen Substanz mit elektrolumineszierenden Eigenschaften und dem transparenten elektrisch leitfähigen Pigment ein transparentes oder aber auch ein opakes Effektpigment enthält, eine Schicht aufgebracht werden, die ein transparentes Effektpigment enthält. In beiden Fällen lassen sich interessante zusätzliche Farbeffekte oder Verstärkungen des ursprünglichen Farb- und/oder Glanzeffekts erzielen.

Dieselben Variationsmöglichkeiten liegen selbstverständlich auch dann vor, wenn das erfindungsgemäße Sicherheitselement in Form einer polymeren Schicht vorliegt, welche entweder mit anderen polymeren Schichten verbunden oder aber auch über-und/oder unterdruckt werden kann.

Werden mehrere pigmenthaltige Schichten übereinander aufgebracht, wobei mindestens eine Schicht das erfindungsgemäße Sicherheitselement enthält, kann die darunter und/oder darüber liegende Schicht dieselbe oder auch eine andere Form aufweisen wie das erfindungsgemäße Sicherheitselement.
Dadurch ergeben sich große Variationsmöglichkeiten, insbesondere hinsichtlich der optisch wahrnehmbaren Form- und Farbgestaltung. Beispielsweise ist ein vollflächig aufgetragener, opaker farbiger und gegebenenfalls optisch variabler Untergrund möglich, auf welchem sich das erfindungsgemäße Sicherheitselement in einer bestimmten Formgebung abhebt. Es ist ebenso möglich, dass mindestens zwei übereinander liegende Schichten dieselbe Form aufweisen und exakt übereinander angeordnet sind, so dass eine Verstärkung des optischen Effekts nur an dieser Stelle sichtbar ist.

Im Sicherheitselement gemäß der vorliegenden Erfindung liegen die genannten Pigmentbestandteile in statistischer Verteilung vor.
In anschaulicher Form kann die Anordnung der Pigmente als dachziegelartiger Aufbau der vorzugsweise eingesetzten plättchenförmigen transparenten elektrisch leitfähigen Pigmente mit dazwischen verstreut angeordneten Partikeln mit elektrolumineszierenden Eigenschaften beschrieben werden. Werden zusätzlich plättchenförmige Effektpigmente eingesetzt, besitzen die meisten davon, ebenso wie Farbpigmente sowie Bindemittel und polymere Grundmassen, dielektrische Eigenschaften.

Für die maschinelle Lesbarkeit der Elektrolumineszenz ist es erforderlich, dass die Leuchtintensität der Partikel groß genug ist, um vom Lesegerät erfasst und eindeutig zugeordnet werden zu können.

Es ist klar ersichtlich, dass bedingt durch die dachziegelartige Anordnung der verschiedenen plättchenförmigen Pigmente nicht gewährleistet ist, dass alle elektrolumineszierenden Partikel an der Oberfläche des Sicherheitselementes liegen. Vielmehr wird eine Vielzahl von ihnen von den plättchenförmigen Pigmenten verdeckt. Eine Erhöhung der Konzentration der elektrolumineszierenden Partikel würde aber verarbeitungstechnische Nachteile mit sich bringen.
Die Transparenz der elektrisch leitfähigen Pigmente ermöglicht es nun, auch darunter liegende elektrolumineszierende Partikel sehen zu können, wenn diese eine ausreichend hohe Lumineszenzintensität aufweisen. Es hat sich auch als besonders vorteilhaft herausgestellt, wenn sowohl transparente oder zumindest semitransparente plättchenförmige Effektpigmente als auch transparente elektrisch leitfähige plättchenförmige Pigmente eingesetzt werden. Diese behindern die Sicht auf die elektrolumineszierenden Pigmente, die unter ihnen liegen, nicht.

Um die Elektrolumineszenz im erfindungsgemäßen Sicherheitselement maschinell detektieren zu können, wird das Sicherheitserzeugnis, welches das Sicherheitselement aufweist, in ein elektrisches Wechselfeld eingebracht. Prinzipiell sind die Anordnungen bzw. Prüfgeräte, die in DE 197 58 587 C2 beschrieben sind, zur Messung der Elektrolumineszenz im erfindungsgemäßen Sicherheitselement geeignet.

Die Feldlinien des elektrischen Wechselfeldes durchdringen das erfindungsgemäße Sicherheitselement und werden durch die transparenten plättchenförmigen elektrisch leitfähigen Pigmenten abgelenkt, so dass es partiell zu einer Verstärkung des elektrischen Feldes kommt. Die derart verstärkten elektromagnetischen Wellen führen zu einer vermehrten Anregung der Partikel mit elektrolumineszierenden Eigenschaften und provozieren dort eine verstärkte Abgabe von Lumineszenzstrahlung, welche vom Meßgerät eindeutig erfasst und zugeordnet werden kann.

Prinzipiell wäre eine solche Verstärkung der Lumineszenzstrahlung auch mit nicht transparenten elektrisch leitfähigen Pigmenten erzielbar, beispielsweise mit Metallpigmenten oder Pigmenten, welche Metallschichten enthalten. Deren Lichtundurchlässigkeit führt jedoch unweigerlich dazu, dass hohe Pigmentkonzentrationen bezüglich der elektrolumineszierenden Partikel eingesetzt werden müssen, da unter den nicht transparenten Pigmenten liegende Partikel vollständig verdeckt werden. Solche hohen Pigmentkonzentrationen sind nachteilig.

Außerdem sind Kombinationen mit farbigen Unterdrucken, wie vorab beschrieben, beim Einsatz von opaken elektrisch leitfähigen Pigmenten nicht möglich. Es hat sich weiterhin herausgestellt, dass mit opaken elektrisch leitfähigen Pigmenten, insbesondere solchen mit Metallschichten, hergestellte Sicherheitselemente bei nachfolgenden mechanischen Beanspruchungen des Sicherheitserzeugnisses, sei es durch Druckplatten oder insbesondere durch übliche nachfolgende Prägedruckverfahren (Embossing), ihre elektrische Leitfähigkeit verlieren, obwohl ihre gegebenenfalls auch vorhandenen optischen Eigenschaften erhalten bleiben. Dadurch reicht dann die Elektrolumineszenz im Sicherheitselement nicht mehr aus, um eindeutig maschinenlesbar zu sein.

Es war daher äußerst überraschend, dass eine Kombination von elektrisch leitfähigen nicht transparenten Pigmenten, insbesondere solchen mit Metallschichten, die in diesem Falle als Effektpigmente eingesetzt werden, mit transparenten elektrisch leitfähigen Pigmenten und Elektrolumineszenzpartikeln gemäß der vorliegenden Erfindung zu Sicherheitselementen führt, welche sowohl die optischen Eigenschaften der metallischen Effektpigmente als auch eine ausreichend hohe maschinell lesbare Elektrolumineszenz aufweisen, auch wenn sie nachfolgenden mechanischen Beanspruchungen, beispielsweise bei einem Prägedruckverfahren, unterliegen.
Dies ist daher eine weitere bevorzugte Ausführungsform der vorliegenden Erfindung.

Das Sicherheitselement gemäß der vorliegenden Erfindung weist im Vergleich zu den bekannten Lösungen des Standes der Technik eine Reihe von Vorteilen auf. Da eine berührungslose maschinelle Detektion von elektrolumineszierender Strahlung beim alleinigen Einsatz geeigneter Mengen elektrolumineszierender Materialien in Sicherheitselementen regelmäßig nicht gelingt und Sicherheitselemente mit integrierten Elektroden einen komplizierten Aufbau besitzen, ist es ein großer Vorteil der vorliegenden Erfindung, durch Zugabe eines einzigen weiteren Materials das Problem der berührungslosen Messung von Elektrolumineszenz gelöst zu haben.
Dabei wurde festgestellt, dass die maschinelle Prüfung des erfindungsgemäßen Sicherheitselementes weniger Zeit in Anspruch nimmt als die Prüfung anderer Sicherheitselemente, so dass sie problemlos in den bereits vorhandenen Prüfablauf, beispielsweise von Banknoten, integriert werden kann.

Zur Lösung der erfindungsgemäßen Aufgabe reicht es aus, beispielsweise einer Druckfarbe lediglich zwei verschiedene partikuläre Materialien in geeigneten Mengen zuzugeben, so dass das Sicherheitselement gemäß der vorliegenden Erfindung auch einen einfachen Aufbau besitzt, welcher sich im einfachsten Falle über einen Aufdruck auf ein gebräuchliches Substrat realisieren lässt. Ähnlich einfach sind polymere Schichten aufgebaut, welche das erfindungsgemäße Sicherheitselement darstellen.

Sowohl Drucke als auch polymere Schichten lassen sich bedingt durch ihre Transparenz hervorragend mit sichtbaren, insbesondere farbigen, darüber- oder darunter liegenden Schichten kombinieren. Gleichzeitig oder alternativ dazu kann das erfindungsgemäße Sicherheitselement selbst jedoch auch Effekt- und/oder Farbpigmente enthalten, die ihrerseits ein optisch ohne Hilfsmittel detektierbares Sicherheitsmerkmal darstellen können.

Da viele elektrolumineszierende Substanzen auch photolumineszierende Eigenschaften aufweisen, kann dies bei Bedarf zur Integration einer weiteren Sicherheitsstufe führen, die beispielsweise mit einer UV-Lampe verifizierbar ist.

Das Sicherheitselement gemäß der vorliegenden Erfindung stellt daher eine hervorragende Möglichkeit dar, neben der maschinellen berührungslosen Lesbarkeit von elektrolumineszierenden Eigenschaften an einer einzigen Stelle eines Sicherheitserzeugnisses mehrere Sicherheitsmerkmale miteinander kombinieren zu können, welche verschiedenen Sicherheitsstufen angehören.
Damit wird die Fälschungssicherheit von Sicherheitserzeugnissen stark erhöht.

## Patentansprüche

1. Maschinenlesbares Sicherheitselement für Sicherheitserzeugnisse, enthaltend mindestens eine partikelförmige Substanz mit elektrolumineszierenden Eigenschaften sowie ein transparentes elektrisch leitfähiges Pigment, **dadurch gekennzeichnet, dass** mindestens eine Schicht des Sicherheitselementes sowohl eine partikelförmige Substanz mit elektrolumineszierenden Eigenschaften als auch ein transparentes elektrisch leitfähiges Pigment enthält, wobei diese in statistischer Verteilung vorliegen.

2. Sicherheitselement gemäß Anspruch 1, zusätzlich enthaltend mindestens ein plättchenförmiges Effektpigment und/oder mindestens ein organisches oder anorganisches Farbpigment.

3. Sicherheitselement gemäß einem oder mehreren der Ansprüche 1 oder 2, wobei die partikelförmige Substanz mit elektrolumineszierenden Eigenschaften anorganische Verbindungen der Gruppe II und VI des Periodensystems, die mit Cu, Mn oder Ag dotiert oder aktiviert sind, mit Mn, Sr oder seltenen Erden aktivierte Silikate, Aluminate, Phosphate, Wolframate, Germanate, Borate, EL-Phosphorpasten, organische Polymere oder deren Gemischen enthält, welche durch Anregung in einem elektromagnetischen Wechselfeld eine sichtbare Strahlung emittieren.

4. Sicherheitselement gemäß Anspruch 1 bis 3, wobei es sich bei der partikelförmigen Substanz mit elektrolumineszierenden Eigenschaften um mikroverkapselte Partikel handelt.

5. Sicherheitselement gemäß einem oder mehreren der Ansprüche 1 bis 4, wobei das transparente elektrisch leitfähige Pigment mindestens eine transparente elektrisch leitfähige Schicht aufweist.

6. Sicherheitselement gemäß Anspruch 5, wobei sich die transparente elektrisch leitfähige Schicht auf einem Substrat befindet, welches aus der Gruppe bestehend aus TiO₂, synthetischem oder natürlichem Glimmer, anderen Schichtsilikaten, Glas, SiO₂ oder Al₂O₃ ausgewählt ist.

7. Sicherheitselement gemäß einem oder mehreren der Ansprüche 1 bis 6, wobei das transparente elektrisch leitfähige Pigment ein mit mindestens einer elektrisch leitfähigen Metalloxidschicht beschichtetes Glimmerpigment ist.

8. Sicherheitselement gemäß den Ansprüchen 5 bis 7, wobei die elektrisch leitfähige Schicht eine Schicht aus mit Sb dotiertem Zinnoxid ist.

9. Sicherheitselement gemäß einem oder mehreren der Ansprüche 5 bis 8, wobei sich auf der elektrisch leitfähigen Schicht mindestens eine weitere, dielektrische Schicht befindet.

10. Sicherheitselement gemäß einem oder mehreren der Ansprüche 1 bis 9, wobei das transparente elektrisch leitfähige Pigment plättchenförmig ist und ein Aspektverhältnis von mindestens 2:1 sowie einen mittleren Teilchendurchmesser von 1-500 µm aufweist.

11. Sicherheitselement gemäß einem oder mehreren der Ansprüche 1 bis 10, wobei das transparente elektrisch leitfähige Pigment eine anzahlgewichtete mittlere Kornfläche F₅₀ von größer oder gleich 150 µm² aufweist.

12. Sicherheitselement gemäß einem oder mehreren der Ansprüche 2 bis 11, wobei das plättchenförmige Effektpigment ein Perlglanzpigment, ein überwiegend transparentes oder semitransparentes Interferenzpigment, ein Metalleffektpigment, ein Flüssigkristallpigment (Liquid Crystal Pigment), ein strukturiertes Polymerplättchen oder ein Gemisch aus diesen ist.

13. Sicherheitselement gemäß einem oder mehreren der Ansprüche 2 bis 12, wobei das plättchenförmige Effektpigment einen anorganischen plättchenförmigen Träger mit mindestens einer Beschichtung aus einem Metall, Metalloxid, Metalloxidhydrat oder deren Gemischen, einem Metallmischoxid, -suboxid, oxinitrid, Metallfluorid, BiOCI oder einem Polymer umfasst.

14. Sicherheitselement gemäß einem oder mehreren der Ansprüche 2 bis 13, enthaltend ein überwiegend transparentes plättchenförmiges Effektpigment.

15. Sicherheitselement gemäß einem oder mehreren der Ansprüche 2 bis 13, enthaltend ein Metalleffektpigment mit mindestens einer Metallschicht als plättchenförmiges Effektpigment.

16. Sicherheitselement gemäß einem oder mehreren der Ansprüche 2 bis 15, wobei das plättchenförmige Effektpigment optisch variabel ist.

17. Sicherheitselement gemäß einem oder mehreren der Ansprüche 1 bis 16, welches auf einem Sicherheitserzeugnis vollflächig oder partiell aufgebracht ist.

18. Sicherheitselement gemäß Anspruch 17, welches auf dem Sicherheitserzeugnis mittels einer Druckfarbe aufgedruckt wird.

19. Sicherheitselement gemäß Anspruch 17, welches auf oder in einem Sicherheitserzeugnis in Form einer polymeren Schicht vorliegt.

20. Sicherheitselement gemäß einem oder mehreren der Ansprüche 1 bis 16, welches zusätzlich mindestens ein Polymer, ein Papier und/oder ein Textil enthält und ein Trägermaterial für ein Sicherheitserzeugnis ist.

21. Sicherheitselement gemäß einem oder mehreren der Ansprüche 1 bis 20, welches nach berührungsloser Anregung in einem elektrischen Wechselfeld eine sichtbare und maschinell erfassbare Strahlung emittiert.

22. Sicherheitselement gemäß einem oder mehreren der Ansprüche 1 bis 21, welches nach mechanischer Beanspruchung und nach berührungsloser Anregung in einem elektrischen Wechselfeld eine sichtbare und maschinell erfassbare Strahlung emittiert.

23. Druckfarbe zur Herstellung eines Sicherheitselementes gemäß einem oder mehreren der Ansprüche 1 bis 22, enthaltend mindestens eine partikelförmige Substanz mit elektrolumineszierenden Eigenschaften sowie ein transparentes elektrisch leitfähiges Pigment.

24. Druckfarbe gemäß Anspruch 23, welche zusätzlich mindestens ein plättchenförmiges Effektpigment und/oder mindestens ein organisches oder anorganisches Farbpigment enthält.

25. Druckfarbe gemäß Anspruch 23 oder 24, wobei die Pigmente und Partikel in Form eines Pigmentgemisches eingesetzt werden, welches zumindest zwei verschiedene Arten dieser Pigmente und/oder Partikel enthält.

26. Druckfarbe gemäß Anspruch 25, wobei das Pigmentgemisch zusätzlich mindestens ein Bindemittel enthält.

27. Druckfarbe gemäß Anspruch 26, wobei das Pigmentgemisch in Form von Pearlets, Briketts, Pellets, Granulaten, Chips, Würstchen, als Paste oder als Anteigung vorliegt.

28. Druckfarbe gemäß einem oder mehreren der Ansprüche 23 bis 27, zusätzlich enthaltend mindestens ein Bindemittel.

29. Druckfarbe gemäß Anspruch 28, zusätzlich enthaltend ein oder mehrere Lösemittel, Haftvermittler, Dispergierhilfen, Trocknungsbeschleuniger oder Fotoinitiatoren.

30. Pigmentgemisch für eine Druckfarbe gemäß einem oder mehreren der Ansprüche 23 bis 29, enthaltend mindestens eine partikuläre Substanz mit elektrolumineszierenden Eigenschaften und ein transparentes elektrisch leitfähiges Pigment, sowie optional ein oder mehrere plättchenförmige Effektpigmente und/oder anorganische oder organische Farbpigmente, sowie mindestens ein Bindemittel.

31. Pigmentgemisch gemäß Anspruch 30, welches als fließfähige Pigmentpräparation oder Trockenpräparat vorliegt.

32. Sicherheitserzeugnis, umfassend ein ein- oder mehrschichtiges Trägermaterial und mindestens ein auf oder innerhalb einer Schicht des Trägermaterials angeordnetes maschinenlesbares Sicherheitselement gemäß einem oder mehreren der Ansprüche 1 bis 22.

33. Sicherheitserzeugnis gemäß Anspruch 32, welches das maschinenlesbare Sicherheitselement in Form einer vollflächigen oder partiellen Beschichtung enthält.

34. Sicherheitserzeugnis gemäß Anspruch 33, wobei die Beschichtung in Form eines Aufdruckes vorliegt.

35. Sicherheitserzeugnis gemäß Anspruch 33, wobei die Beschichtung in Form einer polymeren Schicht vorliegt.

## Claims

1. Machine-readable security element for security products, comprising at least one particulate substance having electroluminescent properties and a transparent, electrically conductive pigment, **characterised in that** at least one layer of the security element comprises both a particulate substance having electroluminescent properties and also a transparent, electrically conductive pigment, where these are in random distribution.

2. Security element according to Claim 1, additionally comprising at least one flake-form effect pigment and/or at least one organic or inorganic coloured pigment.

3. Security element according to one or more of Claims 1 and 2, where the particulate substance having electroluminescent properties comprises inorganic compounds from groups II and VI of the Periodic Table which have been doped or activated using Cu, Mn or Ag, Mn-, Sr- or rare earth-activated silicates, aluminates, phosphates, tungstates, germanates, borates, EL phosphor pastes, organic polymers or mixtures thereof, which emit visible radiation through excitation in an electromagnetic alternating field.

4. Security element according to Claims 1 to 3, where the particulate substance having electroluminescent properties comprises microencapsulated particles.

5. Security element according to one or more of Claims 1 to 4, where the transparent, electrically conductive pigment has at least one transparent, electrically conductive layer.

6. Security element according to Claim 5, where the transparent, electrically conductive layer is located on a substrate selected from the group consisting of TiO₂, synthetic or natural mica, other phyllosilicates, glass, SiO₂ and Al₂O₃.

7. Security element according to one or more of Claims 1 to 6, where the transparent, electrically conductive pigment is a mica pigment coated with at least one electrically conductive metal-oxide layer.

8. Security element according to Claims 5 to 7, where the electrically conductive layer is a layer of Sb-doped tin oxide.

9. Security element according to one or more of Claims 5 to 8, where at least one further, dielectric layer is located on the electrically conductive layer.

10. Security element according to one or more of Claims 1 to 9, where the transparent, electrically conductive pigment is in flake form and has an aspect ratio of at least 2 : 1 and an average particle diameter of 1-500 µm.

11. Security element according to one or more of Claims 1 to 10, where the transparent, electrically conductive pigment has a number-weighted mean particle area F₅₀ of greater than or equal to 150 µm².

12. Security element according to one or more of Claims 2 to 11, where the flake-form effect pigment is a pearlescent pigment, a predominantly transparent or semitransparent interference pigment, a metal-effect pigment, a liquid-crystal pigment, a structured polymer flake or a mixture thereof.

13. Security element according to one or more of Claims 2 to 12, where the flake-form effect pigment comprises an inorganic flake-form support having at least one coating of a metal, metal oxide, metal oxide hydrate or mixtures thereof, a metal mixed oxide, suboxide, oxynitride, metal fluoride, BiOCl or a polymer.

14. Security element according to one or more of Claims 2 to 13, comprising a predominantly transparent flake-form effect pigment.

15. Security element according to one or more of Claims 2 to 13, comprising a metal-effect pigment having at least one metal layer as flake-form effect pigment.

16. Security element according to one or more of Claims 2 to 15, where the flake-form effect pigment is optically variable.

17. Security element according to one or more of Claims 1 to 16, which is applied over the entire surface or to part of a security product.

18. Security element according to Claim 17, which is printed onto the security product by means of a printing ink.

19. Security element according to Claim 17, which is in the form of a polymeric layer on or in a security product.

20. Security element according to one or more of Claims 1 to 16, which additionally comprises at least one polymer, a paper and/or a textile and is a support material for a security product.

21. Security element according to one or more of Claims 1 to 20, which emits visible and machine-detectable radiation after contactless excitation in an electric alternating field.

22. Security element according to one or more of Claims 1 to 21, which emits visible and machine-detectable radiation after mechanical stressing and after contactless excitation in an electric alternating field.

23. Printing ink for the production of a security element according to one or more of Claims 1 to 22, comprising at least one particulate substance having electroluminescent properties and a transparent, electrically conductive pigment.

24. Printing ink according to Claim 23, which additionally comprises at least one flake-form effect pigment and/or at least one organic or inorganic coloured pigment.

25. Printing ink according to Claim 23 or 24, where the pigments and particles are employed in the form of a pigment mixture which comprises at least two different types of these pigments and/or particles.

26. Printing ink according to Claim 25, where the pigment mixture additionally comprises at least one binder.

27. Printing ink according to Claim 26, where the pigment mixture is in the form of pearlets, briquettes, pellets, granules, chips, sausages, a paste or a slurry.

28. Printing ink according to one or more of Claims 23 to 27, additionally comprising at least one binder.

29. Printing ink according to Claim 28, additionally comprising one or more solvents, adhesion promoters, dispersion aids, drying accelerators or photoinitiators.

30. Pigment mixture for a printing ink according to one or more of Claims 23 to 29, comprising at least one particulate substance having electroluminescent properties and a transparent, electrically conductive pigment, and optionally one or more flake-form effect pigments and/or inorganic or organic coloured pigments, and at least one binder.

31. Pigment mixture according to Claim 30, which is in the form of a flowable pigment composition or dry preparation.

32. Security product comprising a single- or multilayered support material and at least one machine-readable security element according to one or more of Claims 1 to 22 arranged on or within a layer of the support material.

33. Security product according to Claim 32, which comprises the machine-readable security element in the form of a full-area or partial coating.

34. Security product according to Claim 33, where the coating is in the form of a print.

35. Security product according to Claim 33, where the coating is in the form of a polymeric layer.

## Revendications

1. Elément de sécurité assimilable par machine pour produits de sécurité, comprenant au moins une substance particulaire ayant des propriétés électroluminescentes et un pigment électro-conducteur et transparent, **caractérisé en ce qu'**au moins une couche de l'élément de sécurité comprend une substance particulaire ayant des propriétés électroluminescentes ainsi qu'un pigment électro-conducteur et transparent, où ceux-ci sont distribués de manière aléatoire.

2. Élément de sécurité selon la revendication 1, comprenant en outre au moins un pigment à effet sous forme de paillettes et/ou au moins un pigment coloré organique ou minéral.

3. Élément de sécurité selon l'une ou plusieurs des revendications 1 et 2, où la substance particulaire ayant des propriétés électroluminescentes comprend des composés minéraux issus des groupes II et VI du Tableau Périodique qui ont été dopés ou activés par Cu, Mn ou Ag, des borates, des germanates, des tungstates, des phosphates, des aluminates, des silicates activés par Mn, Sr ou des terres rares, des pâtes de phosphore électroluminescent, des polymères organiques ou des mélanges de ceux-ci, qui émettent un rayonnement visible par excitation dans un champ électromagnétique alternatif.

4. Élément de sécurité selon les revendications 1 à 3, où la substance particulaire ayant des propriétés électroluminescentes comprend des particules microencapsulées.

5. Élément de sécurité selon l'une ou plusieurs des revendications 1 à 4, où le pigment électro-conducteur et transparent possède au moins une couche électro-conductrice et transparente.

6. Élément de sécurité selon la revendication 5, où la couche électro-conductrice et transparente est située sur un substrat choisi parmi le groupe constitué par TiO₂, le mica synthétique ou naturel, d'autres phyllosilicates, le verre, SiO₂ et Al₂O₃.

7. Élément de sécurité selon l'une ou plusieurs des revendications 1 à 6, où le pigment électro-conducteur et transparent est un pigment de mica revêtu d'au moins une couche d'oxyde métallique électro-conductrice.

8. Élément de sécurité selon les revendications 5 à 7, où la couche électro-conductrice est une couche d'oxyde d'étain dopé par Sb.

9. Élément de sécurité selon l'une ou plusieurs des revendications 5 à 8, où au moins une couche diélectrique supplémentaire est située sur la couche électro-conductrice.

10. Élément de sécurité selon l'une ou plusieurs des revendications 1 à 9, où le pigment électro-conducteur et transparent se trouve sous forme de paillettes et possède un rapport de longueur d'au moins 2:1 et un diamètre moyen de particules de 1-500 µm.

11. Élément de sécurité selon l'une ou plusieurs des revendications 1 à 10, où le pigment électro-conducteur et transparent possède une surface particulaire moyenne pondérée en nombre F₅₀ supérieure ou égale à 150 µm².

12. Élément de sécurité selon l'une ou plusieurs des revendications 2 à 11, où le pigment à effet sous forme de paillettes est un pigment nacré, un pigment d'interférence essentiellement transparent ou semi-transparent, un pigment à effet métallique, un pigment à cristaux liquides, une paillette polymère structurée ou un mélange de ceux-ci.

13. Élément de sécurité selon l'une ou plusieurs des revendications 2 à 12, où le pigment à effet sous forme de paillettes comprend un support minéral sous forme de paillettes comportant au moins un revêtement en métal, oxyde métallique, oxyde métallique hydraté ou des mélanges de ceux-ci, un oxyde mixte, sous-oxyde, oxynitrure métallique, un fluorure métallique, BiOCl ou un polymère.

14. Élément de sécurité selon l'une ou plusieurs des revendications 2 à 13, comprenant un pigment à effet sous forme de paillettes essentiellement transparent.

15. Élément de sécurité selon l'une ou plusieurs des revendications 2 à 13, comprenant un pigment à effet métallique comportant au moins une couche métallique comme pigment à effet sous forme de paillettes.

16. Élément de sécurité selon l'une ou plusieurs des revendications 2 à 15, où le pigment à effet sous forme de paillettes est optiquement variable.

17. Élément de sécurité selon l'une ou plusieurs des revendications 1 à 16, qui est appliqué sur l'ensemble de la surface ou une partie d'un produit de sécurité.

18. Élément de sécurité selon la revendication 17, qui est imprimé sur le produit de sécurité au moyen d'une encre d'impression.

19. Élément de sécurité selon la revendication 17, qui est sous la forme d'une couche polymère sur ou dans un produit de sécurité.

20. Élément de sécurité selon l'une ou plusieurs des revendications 1 à 16, qui comprend en outre au moins un polymère, un papier et/ou un textile et constitue un matériau support pour un produit de sécurité.

21. Élément de sécurité selon l'une ou plusieurs des revendications 1 à 20, qui émet un rayonnement visible et détectable par machine après excitation sans contact dans un champ électrique alternatif.

22. Élément de sécurité selon l'une ou plusieurs des revendications 1 à 21, qui émet un rayonnement visible et détectable par machine après un stress mécanique et après excitation sans contact dans un champ électrique alternatif.

23. Encre d'impression destinée à la production d'un élément de sécurité selon l'une ou plusieurs des revendications 1 à 22, comprenant au moins une substance particulaire ayant des propriétés électroluminescentes et un pigment électro-conducteur et transparent.

24. Encre d'impression selon la revendication 23, comprenant en outre au moins un pigment à effet sous forme de paillettes et/ou au moins un pigment organique ou minéral coloré.

25. Encre d'impression selon la revendication 23 ou 24, où les pigments et particules sont employés sous la forme d'un mélange de pigments comprenant au moins deux types différents de ces pigments et/ou particules.

26. Encre d'impression selon la revendication 25, où le mélange de pigments comprend en outre au moins un liant.

27. Encre d'impression selon la revendication 26, où le mélange de pigments se trouve sous forme de petites perles, de briquettes, de pastilles, de granulés, de copeaux, de saucisses, d'une pâte ou d'une bouillie.

28. Encre d'impression selon l'une ou plusieurs des revendications 23 à 27, comprenant en outre au moins un liant.

29. Encre d'impression selon la revendication 28, comprenant en outre un ou plusieurs solvants, promoteurs d'adhérence, auxiliaires de dispersion, accélérateurs de séchage ou photo-initiateurs.

30. Mélange de pigments destiné à une encre d'impression selon l'une ou plusieurs des revendications 23 à 29, comprenant au moins une substance particulaire ayant des propriétés électroluminescentes et un pigment électro-conducteur et transparent, et éventuellement un ou plusieurs pigments à effet sous forme de paillettes et/ou des pigments minéraux ou organiques colorés, et au moins un liant.

31. Mélange de pigments selon la revendication 30, qui se trouve sous la forme d'une préparation sèche ou d'une composition de pigments écoulable.

32. Produit de sécurité comprenant un matériau support monocouche ou multi-couches et au moins un élément de sécurité assimilable par machine selon l'une ou plusieurs des revendications 1 à 22, disposés sur ou au sein d'une couche de matériau support.

33. Produit de sécurité selon la revendication 32, comprenant l'élément de sécurité assimilable par machine sous la forme d'un revêtement total ou partiel.

34. Produit de sécurité selon la revendication 33, où le revêtement se trouve sous la forme d'une impression.

35. Produit de sécurité selon la revendication 33, où le revêtement se trouve sous la forme d'une couche polymère.
